# FASCICULE DE BREVET EUROPEEN

(11) **EP 0 403 372 B1**
(45) Date de publication et mention de la délivrance du brevet: **27.04.1994**
(21) Numéro de dépôt: 90401628.4
(22) Date de dépôt: 13.06.1990
(51) Int. Cl.: F02K 7/16, F02K 9/78, F02C 3/067, F02C 3/14

(54) **Propulseur combiné turbofusée statoréacteur à réchauffe et son procédé de fonctionnement**
Turbostrahl- und Raketenkombinationstriebwerk
Combined turbo-stato-rocket jet engine

(30) Priorité: 14.06.1989 FR 8907846
(43) Date de publication de la demande: 19.12.1990
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Lardellier, Alain Marie Joseph, F-77000 Melun (FR); Thetiot, Raymond Pierre Marie, F-77350 Le Mee S/Seine (FR)
(74) Mandataire: Berrou, Paul

(56) Documents cités:
- EP-A- 0 185 599
- EP-A- 0 270 403
- DE-C- 3 617 915
- FR-E- 86 207
- GB-A- 2 205 360
- US-A- 3 237 400
- FLIGHT INTERNATIONAL. vol. 86, no. 2903, 29 octobre 1964, LONDON GB&Keenan:"The Turborocket"

## Description

La présente invention a pour objet un propulseur combiné turbofusée-statoréacteur à post-combustion.

On connait déjà des dispositifs de propulsion composites ou combinés constitués par l'association d'un turboréacteur et d'un statoréacteur.

Ces dispositifs mettent à profit les qualités différentes et complémentaires de ces deux types de moteurs dont on peut dire, de façon simple, que le premier convient à la propulsion à des vitesses relativement faibles, subsoniques ou supersoniques mais à nombre de Mach limité à 2,5 ou 3, tandis que le second permet d'atteindre, avec un bon rendement et une faible consommation spécifique, des vitesses très fortement supersoniques ou hypersoniques.

On connait par ailleurs des moteurs dans lesquels la turbine n'est pas couplée aérodynamiquement au compresseur, ce qui permet d'une part de rendre la fourniture d'énergie à la turbine indépendante du débit d'air à travers le compresseur et d'autre part d'utiliser un carburant assurant avec un bon rendement la conversion de l'énergie en poussée au cours du processus de détente dans la turbine.

Le document FR-A 2 215 538 décrit ainsi un moteur combiné turbo-stato-réacteur dont une turbine de détente directe d'hydrogène entraine par un arbre central un compresseur d'air, la turbine étant disposée dans le corps central du propulseur et ayant des moyens d'éjection de l'hydrogène ainsi détendu dans la veine d'air, où, mélangé à l'air, il sera brûlé. Pour les vitesses élevées, l'hydrogène est admis directement dans la chambre de combustion pour le fonctionnement en statoréacteur et la turbine, qui n'est plus alimentée, tourne en autorotation.

Ce dispositif utilise un cycle dit expander, dans lequel l'hydrogène liquide est chauffé pour recevoir de l'énergie puis est utilisée par simple détente dans la turbine avant d'être brûlé dans la veine d'air.

On connait également par le document US.A.3.237.400 un propulseur turbofusée à rechauffe dont les gaz de combustion d'une fusée centrale entraînent la turbine et, au moyen d'un réducteur à engrenage, un compresseur amont. Une telle structure est également décrite dans le document Flight International vol 86 n° 2903 p. 752 à 754 du 29 Octobre 1964.

On connaît par ailleurs, par le GB-A-2.205.360, un turbo statoréacteur combiné commutable, pour l'entraînement d'avions et engins spéciaux, dans lequel un compresseur possède deux rotors, sans aube directrice, qui sont supportés indépendamment l'un de l'autre et travaillent de manière contrarotative et dont les aubages sont réglables de manière à être immobile en état de drapeau lors du fonctionnement en statoréacteur, lesdits rotors étant entraînés par une turbine de puissance à deux modules contrarotatifs disposés dans le corps central et entraînés par les gaz issus d'un générateur de gaz à ergols liquides. Ce dispositif est toutefois mécaniquement assez compliqué, nécessitant entre la turbine et le compresseur deux arbres coaxiaux contrarotatifs.

La présente invention a pour but de réaliser un moteur combiné du type dans lequel la turbine du turboréacteur est entraînée par les gaz de combustion d'un moteur-fusée ou générateur de gaz placé axialement à l'intérieur du corps central du moteur, tout en ayant une architecture suffisament simple pour permettre l'utilisation d'un ensemble de turbines et de compresseurs contrarotatifs dont les performances de faible consommation et de bons rendements sont plus intéressantes que celles des compresseurs et turbines classiques.

L'invention a également pour but de permettre l'utilisation d'un tel type de turbofusée avec une post-combustion.

Elle a également pour but d'utiliser un moteur turbofusée sans réducteur pour le compresseur.

Elle a également pour but de réaliser un propulseur combiné dont la turbofusée peut être arrêtée à vitesse Supersonique élevée pendant qu'un statoréacteur prend le relai de la propulsion.

L'invention a donc pour objet un propulseur combiné turbofusée stato comportant en aval d'une manche d'entrée d'air et amont d'une tuyère (13), un compresseur d'air à deux étages de rotors contrarotatifs disposés dans une veine formée entre un carter externe et un corps central, le carter et le corps étant maintenus entre eux par des bras structuraux, tandis que les étages de rotor sont entraînés par une turbine de puissance à deux modules contrarotatif propulsée par les gaz de combustion d'un générateur de gaz à ergols liquides.

Selon l'invention les deux modules de la turbine de puissance disposés dans le corps central du moteur, sont placés longitudinalement entre les deux étages du compresseur qu'ils entraînent. De plus, le propulseur comporte un circuit de carburant alimenté depuis un réservoir par une turbopompe, débitant le carburant liquide vers un échangeur de chaleur disposé sur la paroi de tuyère, où le carburant reçoit de l'énergie et dont il ressort à l'état gazeux vers un distributeur permettant son injection de manière connue soit vers le générateur de gaz au travers des bras structuraux pour le fonctionnement en turbofusée, soit vers des injecteurs radiaux disposés dans la chambre de combustion pour le fonctionnement du propulseur en statoréacteur. En outre, le générateur de gaz est alimenté par l'aval en carburant et en comburant au travers des bras structuraux et il génère ses gaz propulsifs dans la chambre centrale d'éjection axialement vers l'amont en direction d'une chambre annulaire, interne au tambour commun à l'étage de compresseur amont et au module externe de turbine, chambre dans laquelle les gaz effectuent un changement de sens pour parcourir les turbines de puissance de l'amont vers l'aval, avant d'être éjectés dans la veine en aval de la chambre de combustion du mode stato par des canaux longitudinaux traversant le corps central.

Selon une autre particularité de l'invention, le propulseur comporte, entre le générateur de gaz et les turbines de puissance, des circuits de refroidissement des pièces tournantes des turbines, le refroidissement étant obtenu par circulation de carburant liquide à très basse température dans lesdits circuits.
Ainsi, les aubes du compresseur peuvent être refroidies par circulation dudit carburant froid avant l'injection de ce dernier par des orifices d'injection réalisés dans le bord de fuite des pales des aubes du compresseur.

L'invention a également pour objet le procédé de fonctionnement du propulseur décrit ci-dessus et ci-après, procédé selon lequel
- du démarrage et jusqu'à une altitude où la vitesse de vol est voisine de Mach 3, on alimente le générateur en hydrogène gazeux en aval de l'échangeur de tuyère, et en oxygène au moyen des turbopompes, ledit générateur entrainant les turbines, on mélange les gaz de combustion du générateur de gaz à l'oxygène de l'air atmosphérique comprimé par le compresseur et on fait subir une post-combustion audit mélange avant de l'éjecter par la tuyère;
- à partir de Mach 3 et jusqu'au fonctionnement en statoréacteur, on refroidit les parties tournantes et les pales de compresseur en sélectionnant l'ouverture des deux circuits par le distributeur ;
- à partir de Mach (4,5), on effectue une transition de fonctionnement vers le mode stato par diminution de l'alimentation du générateur de gaz et par la mise en drapeau simultanée des pales des compresseurs, les pales des compresseurs continuant à être refroidies ;
- on sélectionne l'alimentation des injecteurs et l'arrêt d'alimentation du générateur de gaz en ergols liquides, les pales du compresseur continuant à être alimentées en hydrogène et on brûle dans la chambre de combustion le mélange formé par l'air comprimé dans la manche d'entrée et l'hydrogène injecté par les aubes, enrichi en H₂ par les injecteurs radiaux.

D'autres caractéristiques seront précisées dans le complément de description qui va suivre accompagné des dessins annexés parmi lesquels :
- la figure 1 est un schéma simplifié de réalisation du propulseur selon l'invention.
- la figure 2 montre un mode de réalisation du propulseur.

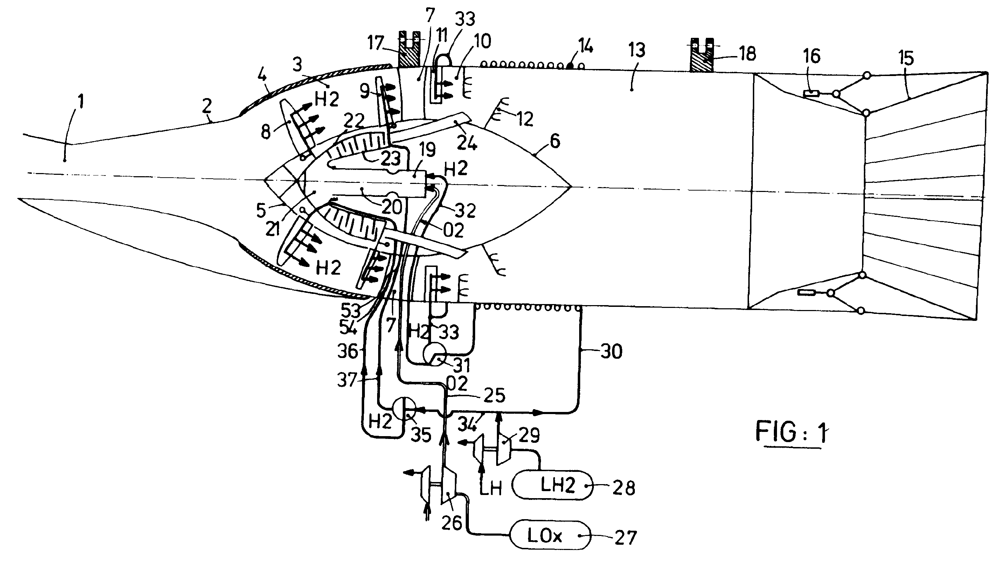

Si l'on regarde la figure 1, le propulseur comporte une veine d'air formée, de l'amont vers l'aval par une entrée d'air 1 bidimensionnelle à section variable suivie d'une section 2 à transition de forme qui permet la jonction avec une veine annulaire 3 formée entre un carter externe 4 et un corps central 5 ayant globalement une forme ogivale dont la partie arrière se termine en cône 6. Le corps central 5 est maintenu dans le carter 4 par des bras structuraux 7 régulièrement répartis sur la périphérie de la veine.

Dans la partie comprise entre la section de transition 2 et les bras 7 est disposé un compresseur à deux modules contrarotatifs 8 et 9.

En aval des bras 7, le propulseur comporte une zone de combustion 10 dans laquelle sont disposées des injecteurs de carburant 11 pour le fonctionnement du propulseur en statoréacteur et un système de post-combustion 12 comportant des anneaux accroche-flamme portés par le cône aval 6.

La zone de combustion est suivie par une tuyère 13 dont la structure du carter comporte un échangeur de chaleur 14 apte à apporter de l'énergie au carburant liquide avant son utilisation et à refroidir la paroi de ladite tuyère. Cette dernière est suivie d'une tuyère d'éjection 15 convergente-divergente à section variable commandée de façon connue par exemple par des vérins 16 tel que représenté sur la figure.

Le carter porte au niveau des bras structuraux 7 une bride d'accrochage amont 17 et en aval de la tuyère 13 une bride d'accrochage aval 18.

Sur la figure 1, la partie interne au corps central 5 a été schématisée de façon simplifiée. Un moteur-fusée 19 à ergols liquides est disposé axialement, alimenté par l'aval en ergols et génère des gaz de combustion vers l'amont dans une chambre centrale d'éjection fixe 20, en direction d'une chambre amont annulaire 21, mobile en rotation, dans laquelle les gaz du moteur-fusée sont forcés vers une turbine de puissance formée de deux modules contrarotatifs 22, 23 imbriqués. La turbine 22 radialement externe est liée au module amont 8 du compresseur tandis que la turbine interne 23 est liée au module aval 9 du compresseur.

Après avoir entraîné les turbines 22 et 23, les gaz du générateur 19 sont éjectés dans la veine d'air comprimé au niveau de la zone de combustion 10 par des canaux longitudinaux 24 qui traversent la paroi du corps central 5.

Lorsqu'ils pénètrent dans la veine d'air comprimé, les gaz issus des cannaux 24 sont enrichis en oxygène de l'air de la veine et sont brûlés à nouveau au niveau des accroche-flamme du système de post-combustion 12.

Si l'on regarde les circuits d'alimentation en ergols schématisés à la figure 1, on voit tout d'abord que l'oxygène nécessaire au fonctionnement du générateur de gaz 19 est amené à ce dernier par une canalisation 25 au travers des bras 7, l'oxygène étant pompé par une turbopompe 26 dans un réservoir 27. Par simplification, l'entraînement de la turbine de la turbopompe 26 n'a pas été représenté.

Le circuit d'hydrogène comporte un réservoir de stockage 28, une turbopompe 29 en sortie de laquelle le circuit d'alimentation est divisé en deux branches. La première branche 30 amène l'hydrogène liquide dans l'échangeur de chaleur 14 de la tuyère, où, au contact de la paroi chaude, l'hydrogène acquiert de l'énergie et passe sous forme gazeuse. En sortie de l'échangeur 14, le circuit comporte une vanne deux voies 31 permettant de sélectionner, soit l'alimentation du générateur de gaz 19 par une canalisation 32, soit l'amenée d'hydrogène dans les injecteurs 11 par une canalisation 33 pour le fonctionnement en statoréacteur.

En aval de la turbopompe à l'hydrogène 29, la deuxième branche 34 du circuit amène à un distributeur à trois voies 35 en sortie duquel deux circuits de refroidissement 36 et 37 peuvent être alimentés soit séparément, soit en parallèle.

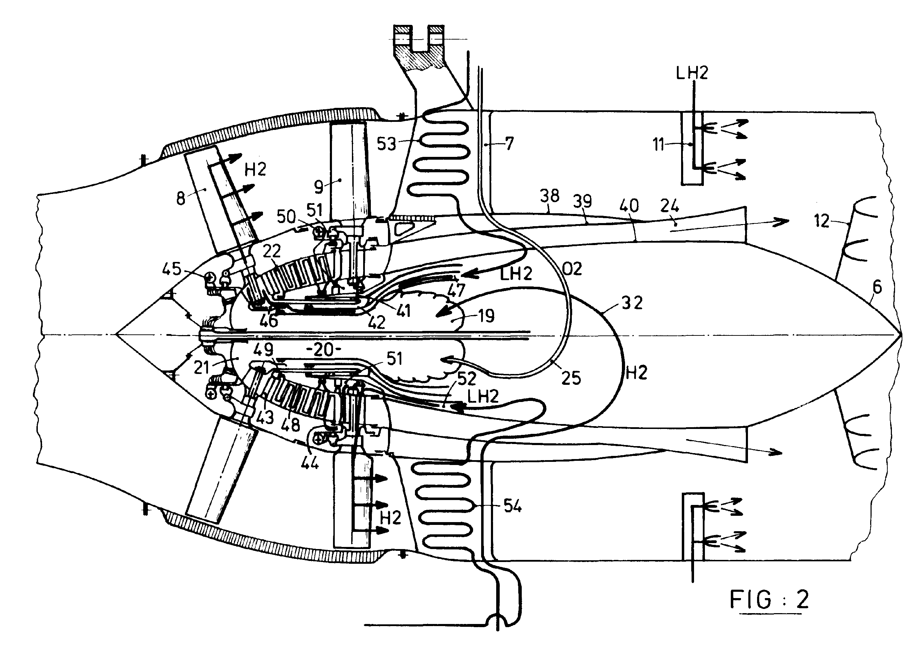

Pour définir l'intérêt de ces circuits de refroidissement 36 et 37, on va détailler la structure des turbines de puissance 22 et 23 en regard de la figure 2.

Si l'on regarde la structure fixe du corps central, on voit qu'elle est constituée d'un carter d'échappement interne 38, des bras support 7, liés à un carter externe 39 et un carter interne 40 de sortie de turbine et à un support externe 41 des paliers communs aux turbines 22 et 23 ainsi qu'à un support interne 42 du palier de la turbine 22.

Le module de turbine 22 comporte 5 étages d'aubes orientées vers l'intérieur. Le tambour 43 portant les aubes est solidarisé à l'amont à l'étage de compression 8 et comporte à l'arrière un labyrinthe 44.

Les pales du compresseur 8 sont équipées d'un système de changement de pas 45. L'axe de rotation des pales est creux et il débouche dans une enceinte annulaire 46 alimentée en hydrogène liquide par un canal annulaire 47 réalisé entre les chambres 19,20 et le support interne 42 du palier de la turbine 22.

Au dela de Mach 3, un débit de LH₂ en provenance de la vanne 35 par le canal 47 refroidit les pales du compresseur 8, puis il est évacué dans la veine, par des perçages de bord de fuite des pales 8 et va se mélanger dans le canal à l'hydrogène du système de rechauffe 11.

Le deuxième module de turbine 9 comporte quatre étages d'aubes orientées vers l'extérieur. Le tambour 48 portant les aubes est solidaire à l'aval de l'étage de compression 9 et comporte à l'amont un labyrinthe 49.

Le deuxième étage de compresseur 9 est constitué de pales équipées d'un dispositif de changement de pas 50. Comme pour le premier étage, l'axe de rotation creux s'ouvre sur une enceinte annulaire 51 alimentée en hydrogène par un canal annulaire 52 formé entre le carter interne de sortie turbine 40 et le support interne de palier 42.

Les pales du compresseur 9 sont également percées sur leur bord de fuite et l'hydrogène qui les a refroidi sort par ces orifices d'injection pour aller se mélanger dans le canal à l'hydrogène du système de rechauffe 11.

Les deux circuits de refroidissement ainsi décrits comportent, entre la vanne 35 et les canaux d'amenée 47 ou 52, des échangeurs de chaleur 53 et 54 formés par des enroulements des tubulures 36 et 37dans les bras support 7 (ou par une structure creuse sinueuse adaptée desdits bras support). Dans ces échangeurs, l'hydrogène liquide se réchauffe partiellement à un niveau tel qu'après s'être à nouveau échauffé en refroidissant les parties mobiles des turbines et les aubes de compresseur, il ressortira dans la veine à l'état gazeux.

Le fonctionnement d'un tel propulseur est le suivant.

Pour le démarrage du propulseur et son accélération la chambre du moteur fusée 19 est alimentée en oxygène par la turbopompe 26, et en hydrogène par la turbopompe 29 la vanne 31 et la canalisation 32.

L'allumage est assuré par un allumeur électrique ou pyrotechnique. Les gaz de combustion constitués d'un mélange H₂O + H₂ + 0₂ se détendent dans les turbines 22, 23, lesquelles entraînent les deux compresseurs 8 et 9.

L'oxygène, apporté par l'air atmosphérique capté par la manche 1 et comprimé par les étages 8 et 9, vient se mélanger à la sortie du canal 24 aux gaz riches en hydrogène. Ce mélange est brûlé dans le système de post-combustion 12.

Au delà de Mach 3, il est nécessaire de refroidir les aubes des compresseurs 8 et 9 et les bras support 7 du carter. Pour ce faire on ouvre la vanne 35, jusqu'alors fermée, de façon à alimenter les échangeurs 53 et 54 ainsi que les cavités 47, 52 et les aubes 8 et 9. L'hydrogène, ayant refroidi ces organes, s'échappe ensuite par les orifices de bord de fuite des pales pour se mélanger dans la veine principale, à l'air atmosphérique.

La transition vers le mode stato s'effectue par l'arrêt progressif du compresseur en diminuant le débit du générateur de gaz 19 au moyen d'une diminution de débit des turbopompes 26 et 29 et par la mise en drapeau simultanée des pales 8 et 9 du compresseur. Lors de l'arrêt du générateur de gaz 19, la vanne 31 est basculée pour fermer l'alimentation du moteur fusée 19 et autoriser l'alimentation des injecteurs 11 de la chambre stato, pendant que les pales du compresseur toujours refroidies assurent une injection supplémentaire dans la veine.

L'air comprimé dans la manche d'entrée d'air 1 se mélange à l'hydrogène issu des pales et il s'autoenflamme. Il est à nouveau enrichi en hydrogène par les injecteurs 11 et se réchauffe au niveau de cette post-combustion.

La structure de l'invention permet de réaliser un propulseur compact et léger ne nécessitant pas de réducteur ni de redresseur pour le compresseur.

Elle utilise une turbine contrarotative à rendement élevé pour le fonctionnement en turbofusée tandis que le fonctionnement stato est facilité par la "transparence" du compresseur mis en drapeau, ce qui assure une poussée accrue par une diminution des pertes de charges.

## Revendications

1. Propulseur combiné turbofusée stato comportant en aval d'une manche d'entrée d'air (1) et amont d'une tuyère (13), un compresseur d'air à deux étages de rotors (8,9), contrarotatifs disposés dans une veine formée entre un carter externe (4,) et un corps central (5,6), le carter et le corps étant maintenus entre eux par des bras structuraux (7), lesdits étages de rotor étant entraînés par une turbine de puissance à deux modules de turbine (22, 23) contrarotatif imbriqués, disposés dans le corps central du moteur, propulsée par les gaz de combustion d'un générateur de gaz (19) à ergols liquides disposé axialement dans le corps central, en arrière des modules de turbine (22, 23), et alimentant ceux-ci au travers d'une chambre d'éjection (20) centrale, un circuit de carburant alimenté depuis un réservoir (28) par une turbopompe (29), débitant le carburant liquide vers un distributeur (31) permettant son injection, soit vers le générateur de gaz (19) au travers des bras structuraux (7) pour le fonctionnement en turbofusée, soit vers des injecteurs radiaux (11) disposés dans la chambre de combustion pour le fonctionnement du propulseur en statoréacteur, caractérisé en ce que, les modules de turbine situés dans le corps central sont placés longitudinalement entre les deux étages du compresseur qu'ils entraînent, en ce que, dans le circuit de carburant, en aval de la turbopompe (29), est placé un échangeur de chaleur (14) disposé sur la paroi de la tuyère, où le carburant reçoit de l'énergie et dont il ressort à l'état gazeux vers le distributeur (31) et en ce que le générateur de gaz (19) est alimenté par l'aval en carburant et en comburant au travers des bras structuraux (7), en ce qu'il génère ses gaz propulsifs dans la chambre centrale (20) d'éjection axialement vers l'amont, en direction d'une chambre annulaire (21) interne au tambour commun à l'étage de compresseur amont (8) et au module externe (22) de turbine, chambre dans laquelle les gaz effectuent un changement de sens pour parcourir les turbines de puissance (22,23) de l'amont vers l'aval, avant d'être éjectés dans la veine en aval de la chambre de combustion du mode stato par des canaux longitudinaux (24) traversant le corps central (6,38).

2. Propulseur combiné selon la revendication 1, caractérisé en ce qu'il comporte un dispositif de post-combustion du mélange d'air comprimé et des gaz issus de la turbine (22,23) en mode turbofusée, ledit dispositif de post-combustion comportant des anneaux accroche-flamme (12) supportés par le cône aval (6) du corps central en aval du plan de sortie des canaux d'éjection (24) des gaz de turbine.

3. Propulseur selon l'une des revendications 1 ou 2, caractérisé en ce qu'il comporte entre le générateur de gaz et les turbines de puissance des circuits de refroidissement (46,47; 51,52) des pièces tournantes des turbines, le refroidissement étant obtenu par circulation de carburant liquide à très basse température dans lesdits circuits, ceux-ci étant alimentés par la turbopompe (29) en dérivation de l'échangeur de chaleur (14).

4. Propulseur selon la revendication 3 caractérisé en ce qu'il comporte deux circuits de refroidissement en parallèle, en ce que chaque circuit (respectivement 47, 52) débouche dans une cavité annulaire (resp 46, 51) d'un des rotors (resp 8, 9) de compresseur, ladite cavité étant en liaison avec des cavités internes des aubes (8,9) creuses, dudit rotor de compresseur pour assurer un refroidissement interne des pales des aubes, ces dernières comportant sur leur bord de fuite des orifices d'évacuation du carburant liquide, aptes à injecter ce dernier dans la veine d'air comprimé en amont de la chambre de combustion.

5. Propulseur selon l'une des revendications 3 ou 4, caractérisé en ce que le circuit d'alimentation des circuits de refroidissement comporte un distributeur (35) apte à sélectionner l'alimentation de l'un ou l'autre des circuits ou des deux circuits ou l'arrêt d'alimentation.

6. Propulseur selon la revendication 5, caractérisé en ce que le circuit d'alimentation de chaque circuit de refroidissement traverse les bras structuraux (7) du propulseur selon un agencement sinueux (53, 54) apte à assurer le refroidissement desdits bras structuraux.

7. Propulseur selon l'une des revendications 1 à 6 caractérisé en ce que les aubes des deux étages du compresseur sont des aubes à calage variable, la plage de calage des aubes s'étendant jusqu'à la mise en drapeau desdites aubes pour le fonctionnement du propulseur en statoréacteur.

8. Propulseur selon l'une quelconque des revendications 1 à 7 caractérisé en ce qu'il comporte une entrée d'air (1) bidimensionnelle.

9. Propulseur selon la revendication 8 caractérisé en ce que l'entrée d'air (1) est à section variable.

10. Propulseur selon l'une quelconque des revendications 1 à 11, caractérisé en ce qu'il comporte une tuyère de sortie (15) convergente-divergente à section variable.

11. Procédé de fonctionnement du propulseur selon l'une quelconque des revendications 1 à 11 dont le carburant est de l'hydrogène liquide et le comburant de l'oxygène caractérisé en ce que
- du démarrage et jusqu'à une altitude où la vitesse de vol est de Mach 3, on alimente le générateur 19 en hydrogène gazeux en aval de l'échangeur de tuyère (14), et en oxygène au moyen des turbopompes (29,26), ledit générateur (19) entrainant les turbines (22,23), on mélange les gaz de combustion du générateur de gaz (19) à l'oxygène de l'air atmosphérique comprimé par le compresseur (8,9) et on fait subir une post--combustion audit mélange avant de l'éjecter par la tuyère (15),
- à partir de Mach 3 et jusqu'au fonctionnement en statoréacteur, on refroidit les parties tournantes et les pales (8,9) de compresseur en sélectionnant l'ouverture des deux circuits de refroidissement, par le distributeur (35),
- à partir de Mach (4,5), on effectue une transition de fonctionnement vers le mode stato par diminution de l'alimentation du générateur de gaz (19) et par la mise en drapeau simultanée des pales (8,9) des compresseurs, les pales (8,9) des compresseurs continuant à être refroidies ;
- on sélectionne l'alimentation des injecteurs (11) et l'arrêt d'alimentation du générateur de gaz (19) en ergols liquides, les pales des compresseurs (8,9) continuant à être alimentées en hydrogène et on brûle dans la chambre de combustion le mélange formé par l'air comprimé dans la manche d'entrée (1) et l'hydrogène injecté par les aubes (8,9), enrichi en H₂ par les injecteurs radiaux (11).

## Patentansprüche

1. Kombiniertes Turboraketen-Staustrahltriebwerk, das stromabwärts eines Lufteinlasses (1) und stromaufwärts einer Düse (13) einen Luftverdichter mit zwei in einem zwischen einem äußeren Gehäuse (4) und einem zentralen Körper (5, 6) liegenden Strömungskanal angeordnete gegenläufige Rotorstufen (8, 9) aufweist, wobei das Gehäuse und der Körper durch Strukturarme (7) miteinander verbunden sind und die Rotorstufen von einer Leistungsturbine angetrieben werden, die zwei in dem zentralen Körper des Motors angeordnete gegenläufige verschachtelte Turbinenmodule (22, 23) aufweist und mit den Verbrennungsgasen eines Gasgenerators (19) für Flüssigergole betrieben wird, der in dem zentralen Körper axial hinter den Turbinenmodulen (22, 23) angeordnet ist und letztere durch eine zentrale Auswurfkammer (20) speist, wobei ein über eine Turbopumpe (29) aus einem Vorratstank (28) gespeister Kraftstoffkreis den flüssigen Kraftstoff über einen Verteiler (31), der das Einspritzen des Kraftstoffs ermöglicht, entweder durch Strukturarme (7) für den Betrieb als Turborakete oder an in der Brennkammer angeordnete radiale Einspritzvorrichtungen (11) für den Betrieb als Staustrahltriebwerk abgibt, **dadurch** **gekennzeichnet,** daß die in dem zentralen Körper angeordneten Turbinenmodule in Längsrichtung zwischen den beiden Stufen des von ihnen angetriebenen Verdichters liegen, daß in dem Kraftstoffkreis stromabwärts der Turbopumpe (29) ein an der Wandung der Düse angeordneter Wärmetauscher (14) vorgesehen ist, in dem der Kraftstoff Energie aufnimmt und von dem aus der Kraftstoff in gasförmigem Zustand zu dem genannten Verteiler (31) gelangt, und daß der Gasgenerator (19) von der stromabwärtigen Seite aus durch Strukturarme (7) mit Kraftstoff und Zündmittel gespeist wird und seine Antriebsgase in der zentralen Auswurfkammer (20) axial stromaufwärts in Richtung auf eine ringförmige Kammer (21) erzeugt, die im Innem der gemeinsamen Trommel der stromaufwärtigen Verdichterstufe (8) und des äußeren Turbinenmoduls (22) liegt, wobei die Gase in dieser Kammer eine Richtungsänderung erfahren, so daß sie die Leistungsturbine (22, 23) von der stromaufwärtigen zur stromabwärtigen Seite durchlaufen, bevor sie stromabwärts der für den Staustrahlbetrieb vorgesehenen Brennkammer durch Kanäle (24), die den zentralen Körper (6, 38) in Längsrichtung durchlaufen, in den Strömungskanal ausgeworfen werden.

2. Kombinationstriebwerk nach Anspruch 1, dadurch gekennzeichnet, daß es eine Nachverbrennunsvorrichtung zum Nachverbrennen des aus komprimierter Luft und den von der Turbine (22, 23) abgegebenen Gasen bestehenden Gemischs im Betrieb als Turborakete aufweist, wobei diese Nachverbrennungsvorrichtung Flammenhalterringe (12) umfaßt, die von dem stromabwärtigen Konus (6) des zentralen Körpers stromabwärts der Austrittsebene der Auswurfkanäle (24) der Turbinengase getragen werden.

3. Triebwerk nach einem der Ansprüche 1 oder 2, dadurch gekennzeichnet, daß zwischen dem Gasgenerator und den Leistungsturbinen Kühlkreise (46, 47; 51, 52) für die drehenden Teile der Turbine vorgesehen sind, wobei die Kühlung durch Zirkulation von flüssigem Kraftstoff mit sehr niedriger Temperatur in diesen Kühlkreisen erreicht wird und wobei die Kühlkreise parallel zu dem Wärmetauscher von der Turbopumpe (29) gespeist werden.

4. Triebwerk nach Anspruch 3, dadurch gekennzeichnet, daß zwei parallele Kühlkreise vorgesehen sind, daß jeder dieser Kühlkreise (47 bzw. 52) in einem ringförmigen Hohlraum (46 bzw. 51) eines der Verdichterrotoren (8 bzw. 9) mündet und daß dieser Hohlraum mit inneren Hohlräumen der hohlen Schaufeln (8, 9) des betreffenden Verdichterrotors in Verbindung steht, um eine innere Kühlung der Schaufelblätter zu erreichen, wobei die Schaufelblätter an ihrer Hinterkante Öffnungen für den Austrag von flüssigem Kraftstoff aufweisen, die diesen stromaufwärts der Brennkammer in den komprimierten Luftstrom einspritzen können.

5. Triebwerk nach einem der Ansprüche 3 oder 4, dadurch gekennzeichnet, daß der Speisekreis für die Kühlkreise einen Verteiler (35) aufweist für die wahlweise Speisung des einen oder des anderen oder beider Kühlkreise oder die Unterbrechung der Speisung.

6. Triebwerk nach Anspruch 5, dadurch gekennzeichnet, daß der Speisekreis jedes Kühlkreises die Strukturarme (7) des Triebwerks in einer gewundenen Anordnung (44) durchläuft, die die Kühlung der Strukturarme ermöglicht.

7. Triebwerk nach einem der Ansprüche 1 bis 6, dadurch gekennzeichnet, daß die Schaufeln der beiden Verdichterstufen Schaufeln mit variabler Anstellung sind, wobei der Verstellungsbereich für die Schaufelanstellung bis zur Segelstellung für den Betrieb als Staustrahltriebwerk reicht.

8. Triebwerk nach einem der Ansprüche 1 bis 7, dadurch gekennzeichnet, daß es einen zweidimensionalen Lufteinlaß (1) aufweist.

9. Triebwerk nach Anspruch 8, dadurch gekennzeichnet, daß der Lufteinlaß (1) variablen Querschnitt hat.

10. Triebwerk nach einem der Ansprüche 1 bis 8, daß es eine konvergierend-divergierende Austrittsdüse (15) mit variablem Querschnitt besitzt.

11. Verfahren für den Betrieb des Triebwerks nach einem der Ansprüche 1 bis 10 mit flüssigem Wasserstoff als Kraftstoff und Sauerstoff als Zündmittel,
**dadurch gekennzeichnet,**
daß man vom Start an bis zu einer Höhe, in der die Fluggeschwindigkeit Mach 3 beträgt, den Gasgenerator (19) stromabwärts des Düsenwärmetauschers (14) mit gasförmigem Wasserstoff und mit Hilfe der Turbopumpen (29, 26) mit Sauerstoff speist, wobei der Generator (19) die Turbinen (22, 23) antreibt und wobei man die Verbrennungsgase des Gasgenerators (19) mit Sauerstoff aus der von dem Verdichter (8, 9) komprimierten atmosphärischen Luft mischt und die Mischung einer Nachverbrennung unterzieht, bevor sie durch die Düse (15) ausgestoßen wird,
daß man von Mach 3 an bis zum Betrieb als Staustrahltriebwerk die drehenden Teile und die Verdichterschaufeln (8, 9) kühlt, indem man das Öffnen beider Kühlkreise durch den Verteiler (35) wählt,
daß man von Mach 4,5 an durch Reduzierung der Speisung des Gasgenerators (19) und gleichzeitiges Setzen der Schaufelblätter (8, 9) der Verdichter auf Segelstellung einen Übergang auf den Staustrahlbetrieb herbeiführt, wobei die Schaufelblätter (8, 9) der Verdichter weiterhin gekühlt werden,
und daß man die Speisung der Einspritzvorrichtungen (11) und die Unterbrechung der Speisung des Gasgenerators (19) mit Flüssigergolen wählt, wobei den Schaufelblättern (8, 9) der Verdichter weiterhin Wasserstoff zugeführt wird, und wobei man in der Brennkammer das aus der komprimierten Luft in dem Lufteinlaß (1) und dem durch die Schaufeln (8, 9) eingespritzten Wasserstoff gebildete Gemisch verbrennt, das durch die radialen Einspntzvorrichtungen (11) mit H₂ angereichert wird.

## Claims

1. Combined turbo-rocket/ramjet engine including, downstream of an air intake (1) and upstream of a jet pipe (13), an air compressor with two contra-rotating rotor stages (8, 9) which are located in a stream formed between an outer casing (4) and a central body (5, 6), the casing and the body being held together by structural arms (7), the said rotor stages being driven by a power turbine having two imbricated contra-rotating turbine modules (22, 23) which are located in the central body of the motor, propelled by the combustion gases from a liquid-ergol gas generator (19) located axially in the central body, behind the turbine modules (22, 23), and supplying the latter through a central ejection chamber (20), a fuel circuit supplied from a reservoir (28) by a turbo pump (29) delivering the liquid fuel to a distributor (31) allowing it to be injected either towards the gas generator (19) through the structural arms (7) for operation in turbo-rocket mode, or to radial injectors (11) which are located in the combustion chamber for operation of the engine in ramjet mode, characterized in that the turbine modules situated in the central body are placed longitudinally between the two stages of the compressor which they drive, in that, in the fuel circuit, downstream of the turbo pump (29), is placed a heat exchanger (14) located on the wall of the jet pipe, in which the fuel receives energy and from which it emerges in the gaseous state towards the distributor (31), and in that the gas generator (19) is supplied with fuel and with oxidant from downstream through the structural arms (7), in that it generates its propulsive gases in the central ejection chamber (20) axially towards upstream, in the direction of an annular chamber (21) internal to the spool which is common to the upstream compressor stage (8) and to the external turbine module (22), in which chamber the gases undergo a change in direction to pass through the power turbines (22, 23) from upstream to downstream, before being ejected into the stream downstream of the combustion chamber of the ramjet mode via longitudinal passages (24) passing through the central body (6, 38).

2. Combined engine according to Claim 1, characterized in that it includes a device for reheating the mixture of compressed air and of the gases leaving the turbine (22, 23) in turbo-rocket mode, the said afterburner including flameholder rings (12) which are supported by the downstream cone (6) of the central body downstream of the outlet plane of the ejection passages (24) for the turbine gases.

3. Engine according to one of Claims 1 or 2, characterized in that it includes, between the gas generator and the power turbines, circuits (46, 47; 51, 52) for cooling the rotating parts of the turbines, the cooling being obtained by liquid fuel at very low temperature circulating in the said circuits, these circuits being supplied by the turbo pump (29) as a branch off of the heat exchanger (14).

4. Engine according to Claim 3, characterized in that it includes two parallel cooling circuits, in that each circuit (47, 52 respectively) opens out into an annular cavity (46, 51 respectively) of one of the compressor rotors (8, 9 respectively), the said cavity being in communication with the cavities inside the hollow blades (8, 9) of the said compressor rotor to provide internal cooling of the vanes of the blades, the latter including, on their trailing edge, orifices for discharging the liquid fuel, which are capable of injecting the latter into the compressed air stream upstream of the combustion chamber.

5. Engine according to one of Claims 3 or 4, characterized in that the circuit for supplying the cooling circuits includes a distributor (35) capable of selecting the supply of one or other of the circuits or of both circuits, or of stopping the supply.

6. Engine according to Claim 5, characterized in that the circuit for supplying each cooling circuit passes through the structural arms (7) of the engine in a winding configuration (53, 54) capable of providing cooling of the said structural arms.

7. Engine according to one of Claims 1 to 6, characterized in that the blades of the two stages of the compressor are variable-pitch blades, the range of pitch of the blades extending as far as feathering the said blades to make the engine operate in ramjet mode.

8. Engine according to any one of Claims 1 to 7, characterized in that it includes a two-dimensional air intake (1).

9. Engine according to Claim 8, characterized in that the air inlet (1) has variable cross-section.

10. Engine according to any one of Claims 1 to 11, characterized in that it includes a variable cross-section convergent/divergent outlet nozzle (15).

11. Operating method for the engine according to any one of Claims 1 to 11 in which the fuel is liquid hydrogen and the oxidant is oxygen, characterized in that
- from startup and up to an altitude at which the flight speed is Mach 3, the generator (19) is supplied with gaseous hydrogen downstream of the jet pipe exchanger (14), and with oxygen by means of the turbo pumps (29, 26), the said generator (19) driving the turbines (22, 23), the combustion gases from the gas generator (19) are mixed with the oxygen of the atmospheric air compressed by the compressor (8, 9) and the said mixture undergoes reheat before it is ejected by the nozzle (15),
- from Mach 3 up to operation in ramjet mode, the rotating parts and the compressor vanes (8, 9) are cooled by selecting the opening of the two cooling circuits, using the distributor (35),
- from Mach 4.5 there is a transition in operation towards ramjet mode by decreasing the supply from the gas generator (19) and by simultaneously feathering the vanes (8, 9) of the compressors, the vanes (8, 9) of the compressors continuing to be cooled;
- the supply of the injectors (11) is selected and the supply of liquid ergols to the gas generator (19) is stopped, the vanes of the compressors (8, 9) continuing to be supplied with hydrogen and the mixture formed by the air compressed in the intake (1) and the hydrogen injected by the blades (8, 9), enriched with H₂ by the radial injectors (11), is burnt in the combustion chamber.
